# EUROPEAN PATENT SPECIFICATION

(11) **EP 3 147 027 B1**
(45) Date of publication and mention of the grant of the patent: **12.02.2020**
(21) Application number: 16188089.3
(22) Date of filing: 09.09.2016
(51) Int. Cl.: B01L 3/02, B01L 99/00, G01N 35/10

(54) **LIQUID DISPENSING METHOD**
FLÜSSIGKEITSABGABEVERFAHREN
PROCÉDÉ D'ADMINISTRATION DE LIQUIDE

(30) Priority: 28.09.2015 JP 2015189783
(43) Date of publication of application: 29.03.2017
(73) Proprietor: Shimadzu Corporation, Kyoto-shi, Kyoto 604-8511 (JP)
(72) Inventor: NOZAWA, Tomonori, Hyogo (JP)
(74) Representative: Mewburn Ellis LLP

(56) References cited:
- WO-A1-2015/115200
- JP-A- H04 161 856
- JP-A- H06 213 907
- JP-A- H07 159 415
- JP-A- 2011 117 867
- US-A- 5 133 218

## Description

### BACKGROUND OF THE INVENTION

### 1. Field of the Invention

The present invention relates to a liquid dispensing device and a liquid dispensing method.

### 2. Description of the Related Art

An auto-dispensing mechanism which sucks in and discharges reagents or samples by using a syringe pump, for example is often incorporated in a clinical examination apparatus or others (for example, see JP 2001-165937 A).

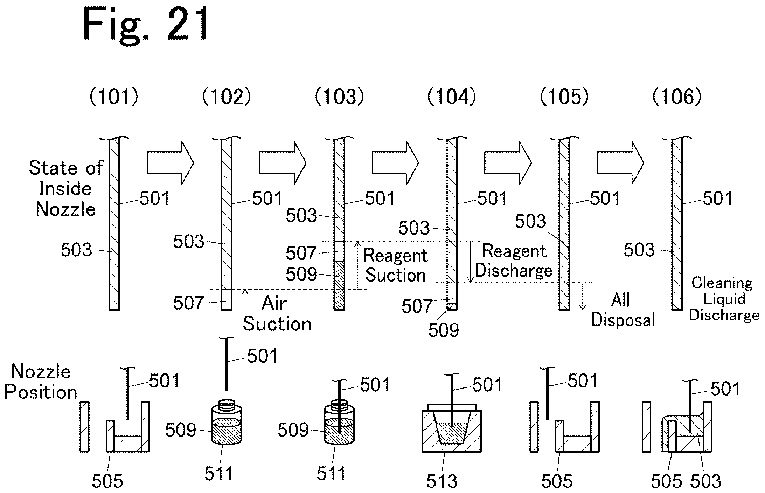

FIG. 21 is a schematic view illustrating a conventional liquid dispensing method. A series of processes for suction, discharge, and cleaning of liquid are hereinafter described with reference to FIG. 21. Numbers in parentheses (101) through (106) in FIG. 21 correspond to step numbers in parentheses (101) through (106) described below.

Step (101) : A pipe and a nozzle 501 connected to a syringe pump are filled with cleaning water 503. The cleaning water 503 is supplied from the syringe pump side into the nozzle 501. This operation is performed above, for example, a cleaning port 505.

Step (102) : Air 507 is sucked into the nozzle 501 through the tip of the nozzle 501 by sucking operation of the syringe pump. The nozzle 501 is shifted to a position above a reagent vessel 511 in which reagent 509 is stored.

Step (103): The tip of the nozzle 501 is inserted into the reagent vessel 511, and immersed in a reagent 509. A predetermined amount of the reagent 509 is sucked in by the sucking operation of the syringe pump. The cleaning water 503 and the reagent 509 within the nozzle 501 are separated from each other with air 507 interposed between the cleaning water 503 and the reagent 509.

Step (104) : The tip of the nozzle 501 is removed from the reagent vessel 511, and shifted to a position above a discharge vessel 513. The tip of the nozzle 501 is inserted into the discharge vessel 513. A predetermined amount of the reagent 509 within the nozzle 501 is discharged into the discharge vessel 513 by discharging operation of the syringe pump.

Step (105) : The tip of the nozzle 501 is removed from the discharge vessel 513, and shifted to a position above a disposal position provided on the cleaning port 505. All of the reagent 509 remaining within the nozzle 501 is disposed of by discharging operation of the syringe pump.

Step (106): The tip of the nozzle 501 is shifted to a position above a cleaning position provided on the cleaning port 505. The cleaning water 503 is supplied from the syringe pump side into the nozzle 501. The cleaning water 503 is discharged through the tip of the nozzle 501 to clean the inside of the nozzle 501 and the outer wall surface of the tip portion of the nozzle 501.

JP H07-159415 A discloses an automatic sample introduction method for a spectrophotometer which purports to prevent the dilution of the sample by a washing liquid. A sample 46 is fed through a thin tube 45 (from e.g. left to right) on its way to a flow cell. When travelling along the tube, the sample is preceded by a number of dummy samples 21, 22, 23. The dummy samples 21, 22, 23 capture droplets 41 of washing liquid adhering to the internal wall of the thin tube 45 to prevent the sample from being diluted by the droplets 41 of washing liquid.

JP 2011-117867 A discloses an automatic analyzer which purportedly makes it easier to ensure proper dispensing accuracy, reduces the amount of sample dummy and prevents complications with sucking/discharging operations. The automatic analyzer includes: a first container storing dilution water or cleaning water; a second container storing a sample; a reaction container; and a probe for sucking the dilution water or the cleaning water from the first container, and further sucking the sample from the second container after sucking the air, and then dispensing the sucked sample into the reaction container. The automatic analyzer for preparing reaction solution by dispensing the sample and a reagent into the reaction container by the probe, and measuring a component amount in the reaction solution, also has a third container storing a non-aqueous solvent, and a driving control part for controlling the probe so as to suck the non-aqueous solvent from the third container by the probe before sucking the sample from the second container after sucking the air.

US 5 133 218 A discloses a sample liquids analysis system which includes a probe which is automatically operable to successively aspirate sample liquids and reagent and/or other sample liquids processing liquids and to dispense the same in turn into sample liquids analysis apparatus for automatic, successive sample liquids analyses. Isolation liquid supply apparatus are operatively associated with the sample liquids aspirating the dispensing probe and operate to introduce an isolation liquid which is immiscible with the sample liquids and which selectively wets the probe to the substantial exclusion of the sample liquids, to the probe to, in combination with operatively associated rinse liquid supply apparatus which operate to fill the probe with a rinse liquid between successive sample liquids aspirations, reducing sample liquids carryover to ultra-low levels. The sample liquids aspirating and dispensing probe are operated by the rinse liquid supply apparatus; and comprise a probe body member, and an active probe component operatively connected thereto by a readily disconnectable connector, thus purportedly making possible the convenient replacement of the active probe component without adverse effects upon the essential configuration and/or operational characteristics of the rinse liquid supply apparatus, and thereby upon the overall performance of the sample liquids analysis system. Furthermore, the configuration of the probe purportedly operates to reduce sample liquids flow velocity in the active probe component, thereby reducing sample liquids carryover.

### SUMMARY OF THE INVENTION

According to the conventional liquid dispensing method, a small amount of cleaning liquid adheres to and remains on the outer wall or the inner wall of the nozzle during suction of dispensing target liquid such as a reagent, for example. In this case, the cleaning liquid is mixed with the dispensing target liquid sucked into the nozzle. Moreover, the cleaning liquid is mixed with the dispensing target liquid stored in the dispensing target liquid vessel.

An object of the present invention is to prevent mixture of cleaning liquid into dispensing target liquid.

According to a first aspect, the present invention provides a liquid dispensing method as set out in claim 1.

According to the liquid dispensing device exemplified herein, and the liquid dispensing method which is an embodiment of the present invention, mixture of cleaning liquid into dispensing target liquid is avoidable.

### BRIEF DESCRIPTION OF THE DRAWINGS

FIG. 1 is a schematic view illustrating a liquid dispensing operation performed by a liquid dispensing device;
FIG. 2 is a schematic view illustrating a structure according to the example of Fig. 1;
FIG. 3 is a plan view schematically illustrating an example of a pretreatment device incorporating a liquid dispensing device;
FIG. 4 is a cross-sectional view schematically illustrating an example of a separation device of a pretreatment kit;
FIG. 5 is a cross-sectional view schematically illustrating an example of a collection vessel of the pretreatment kit;
FIG. 6 is a cross-sectional view schematically illustrating the pretreatment kit in a state that the collection vessel is attached to the separation device;
FIG. 7 is a cross-sectional view schematically illustrating another example of the separation device;
FIG. 8 is a perspective view of a conveyance arm tip portion illustrating an example of a structure of a holding unit of a conveyance arm;
FIG. 9 is a plan view schematically illustrating an example of a filtration port;
FIG. 10 is a schematic cross-sectional view taken along a line X-X in FIG. 9;
FIG. 11 is a schematic cross-sectional view taken along a line Y-Y in FIG. 9;
FIG. 12 is a schematic cross-sectional structure view illustrating a state that the pretreatment kit is set on the filtration port;
FIG. 13 is a general channel structure view illustrating an example of a structure of a negative pressure loading mechanism;
FIG. 14 is a schematic cross-sectional structure view illustrating an example of a structure of a stirring unit;
FIG. 15 is a schematic cross-sectional structure view illustrating an operation state of the stirring unit;
FIG. 16 is a general block diagram illustrating an example of a control system of the pretreatment device;
FIG. 17 is a flowchart showing an example of pretreatment operation performed by the pretreatment device;
FIG. 18 is a general block diagram illustrating an example of an analysis system;
FIG. 19 is a general channel structure view illustrating an example of a structure of a liquid chromatograph system included in the analysis system;
FIG. 20 is a schematic view illustrating a reference example of a liquid dispensing method; and
FIG. 21 is a schematic view illustrating a conventional liquid dispensing method.

### DETAILED DESCRIPTION OF THE INVENTION

According to the liquid dispensing device described herein, the rinsing liquid, for example, is constituted by the dispensing target liquid or a main component of the dispensing target liquid.

According to the liquid dispensing device described herein, the main component of the dispensing target liquid is an organic solvent, while the cleaning liquid is, for example, cleaning water. However, the main component of the dispensing target liquid is not limited to an organic solvent, but may be, for example, an inorganic solvent. In addition, the cleaning liquid is not limited to cleaning water.

According to the liquid dispensing device described herein, the cleaning unit, for example, includes a cleaning liquid tank that stores the cleaning liquid, a cleaning liquid pump that supplies the cleaning liquid from the cleaning liquid tank to the pipe of the dispensing unit, and a valve that opens and closes between the cleaning liquid pump and the pipe of the dispensing unit. However, the cleaning unit is not limited to this structure, and the liquid dispensing device may be constructed otherwise as long as a structure for cleaning the dispensing unit by cleaning liquid is provided.

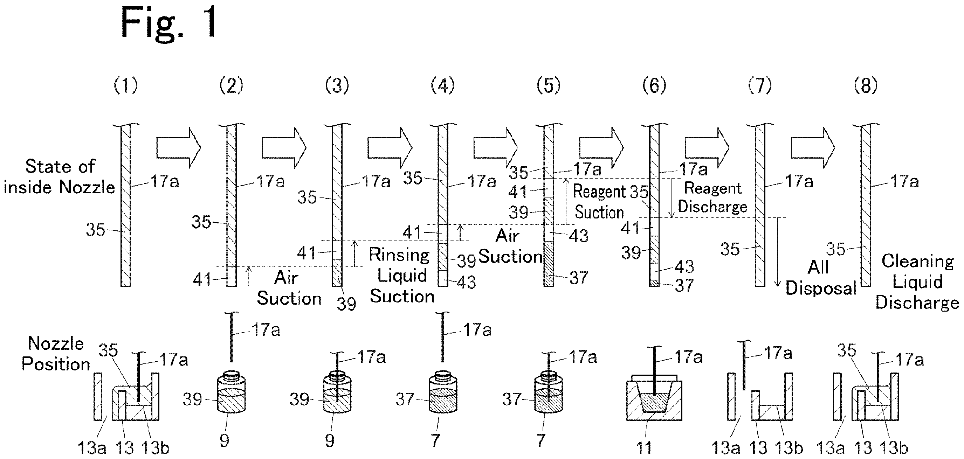

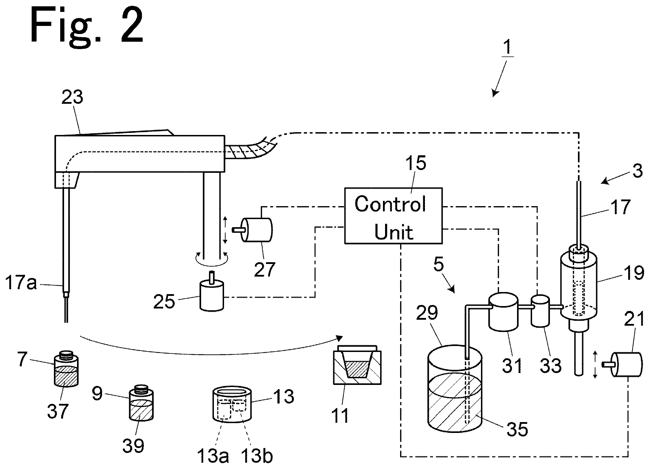

FIG. 1 is a schematic view illustrating a liquid dispensing operation performed by a liquid dispensing device. Fig. 2 is a schematic view illustrating a structure according to the example of Fig. 1. The structure of the liquid dispensing device is initially described with reference to FIG. 2.

A liquid dispensing device 1 includes a dispensing unit 3, a cleaning unit 5, a reagent vessel 7 (dispensing target liquid vessel), a rinsing liquid vessel 9, a discharge vessel 11, a cleaning port 13, and a control unit 15.

The dispensing unit 3 includes a pipe 17 and a syringe pump 19 for sucking in and discharging liquid. The tip of one end of the pipe 17 is constituted by a nozzle 17a. The other end of the pipe 17 is connected to the syringe pump 19. A syringe motor 21 is provided to drive the syringe pump 19 performing sucking operation and discharging operation.

The nozzle 17a is attached to an arm 23 which is rotatable and movable upward and downward. A rotation motor 25 is provided to rotate the arm 23. An up-down shift motor 27 is provided to shift the arm 23 upward and downward.

The cleaning unit 5 includes a cleaning liquid tank 29, a cleaning liquid pump 31, and a valve 33. The cleaning liquid tank 29 stores cleaning liquid 35. The cleaning liquid 35 is constituted by, for example, cleaning water. The cleaning liquid pump 31 sends the cleaning liquid 35 stored in the cleaning liquid tank 29 to the syringe pump 19 and the pipe 17 of the dispensing unit 3. The valve 33 opens and closes piping between the cleaning liquid pump 31 and the syringe pump 19.

The reagent vessel 7 stores a reagent 37 (dispensing target liquid). The reagent 37, for example, is a reagent containing an organic solvent as a main component.

The rinsing liquid vessel 9 stores rinsing liquid 39. The rinsing liquid 39 is constituted by, for example, the reagent 37 or the main component of the reagent 37.

The discharge vessel 11 is a vessel into which the reagent 37 is discharged.

The cleaning port 13 includes a disposal position 13a and a cleaning position 13b. Waste liquid and cleaning liquid are discharged into the cleaning port 13.

The reagent vessel 7, the rinsing liquid vessel 9, the discharge vessel 11, and the cleaning port 13 are disposed on a circular-arc area along a shift track of the nozzle 17a.

The control unit 15 controls operations of the dispensing unit 3 and the cleaning unit 5. More specifically, the control unit 15 controls operations of the syringe motor 21, the rotation motor 25, the up-down shift motor 27, the cleaning liquid pump 31, and the valve 33.

The control unit 15 operates the dispensing unit 3 to suck the rinsing liquid 39 into the nozzle 17a of the dispensing unit 3, and thereafter suck the reagent 37 into the nozzle 17a with gas interposed between the rinsing liquid 39 and the reagent 37. Thereafter, the control unit 15 operates the dispensing unit 3 to discharge the sucked in reagent 37 of the nozzle 17a into the discharge vessel 11. The control unit 15 further operates the dispensing unit 3 and the cleaning unit 5 to dispose of the reagent 37 and the rinsing liquid 39 remaining within the nozzle 17a and clean the insides of the nozzle 17a and the pipe 17 by the cleaning liquid 35.

Operations for suction, discharge, and cleaning of the dispensing target liquid are hereinafter described with reference to FIGS. 1 and 2. Numbers in parentheses (1) through (8) in FIG. 1 correspond to step numbers in parentheses (1) through (8) described below.

Step (1) : Operation of the dispensing unit 3 is initiated by the control unit 15. The tip of the nozzle 17a is set at the cleaning position 13b of the cleaning port 13 by operation of the arm 23 driven by the rotation motor 25 and the up-down shift motor 27. Operation of the cleaning unit 5 is initiated by the control unit 15. The valve 33 is opened, whereafter operation of the cleaning liquid pump 31 is initiated. The cleaning liquid 35 is supplied from the cleaning liquid tank 29 to the pipe 17 via the cleaning liquid pump 31, the valve 33, and the syringe pump 19. The cleaning liquid 35 is discharged from the tip of the nozzle 17a toward the cleaning position 13b. The inside of the nozzle 17a and the outer wall surface of the tip portion of the nozzle 17a are cleaned. Thereafter, the cleaning liquid pump 31 is stopped. The valve 33 is closed. The inside of the pipe 17 and the nozzle 17a are filled with the cleaning liquid 35.

Step (2) : The arm 23 is shifted to set the tip of the nozzle 17a above the rinsing liquid vessel 9. The syringe motor 21 is operated to drive the syringe pump 19 performing sucking operation. A predetermined amount of air 41 is sucked into the nozzle 17a through the tip of the nozzle 17a. The operation for sucking the air 41 into the nozzle 17a may be performed before the nozzle 17a is set above the rinsing liquid vessel 9.

Step (3) : The arm 23 is lowered to insert the tip of the nozzle 17a into the rinsing liquid vessel 9 and immerse the tip of the nozzle 17a in the rinsing liquid 39. A predetermined amount of the rinsing liquid 39 is sucked into the nozzle 17a by the sucking operation of the syringe pump 19. The cleaning liquid 35 and the rinsing liquid 39 within the nozzle 17a are separated from each other via the air 41.

Step (4) : The arm 23 is raised to remove the tip of the nozzle 17a from the rinsing liquid vessel 9. The arm 23 is further shifted to set the tip of the nozzle 17a above the reagent vessel 7. A predetermined amount of air 43 is sucked into the nozzle 17a by the sucking operation of the syringe pump 19. The operation for sucking the air 43 into the nozzle 17a may be performed before the nozzle 17a is set above the reagent vessel 7.

Step (5) : The arm 23 is lowered to insert the tip of the nozzle 17a into the reagent vessel 7 and immerse the tip of the nozzle 17a in the reagent 37. A predetermined amount of the reagent 37 is sucked into the nozzle 17a by the sucking operation of the syringe pump 19. The rinsing liquid 39 and the reagent 37 within the nozzle 17a are separated from each other via the air 43.

Step (6) : The arm 23 is raised to remove the tip of the nozzle 17a from the reagent vessel 7. The arm 23 is further shifted to insert the tip of the nozzle 17a into the discharge vessel 11. A predetermined amount of the reagent 37 within the nozzle 17a is discharged into the discharge vessel 11 by the discharging operation of the syringe pump 19. The reagent 37 still remains within the nozzle 17a.

Generally, a small amount of liquid remains within the nozzle 17a during discharge of liquid from the inside of the nozzle 17a. Accordingly, the sucking amount of the reagent 37 into the nozzle 17a is set to an amount larger than the discharge amount of the reagent 37 into the discharge vessel 11. However, the sucking amount of the reagent 37 into the nozzle 17a may be set to an amount equivalent to the discharge amount of the reagent 37 into the discharge vessel 11.

The discharge vessel 11 may be a vacant vessel, or may contain a different substance, such as a sample solution beforehand.

Step (7) : The arm 23 is raised to remove the tip of the nozzle 17a from the discharge vessel 11. The arm 23 is further shifted to set the tip of the nozzle 17a at a position above a disposal position 13a provided on the cleaning port 13. All of the reagent 37 and the rinsing liquid 39 remaining inside the nozzle 17a are disposed of by the discharging operation of the syringe pump 19.

Step (8) : The arm 23 is shifted to set the tip of the nozzle 17a at the cleaning position 13b of the cleaning port 13. The cleaning unit 5 is operated in a manner similar to the operation of the cleaning unit 5 described in step (1). The inside of the nozzle 17a and the outer wall surface of the tip portion of the nozzle 17a are cleaned. Thereafter, the cleaning liquid pump 31 is stopped. The valve 33 is closed. The inside of the pipe 17 and the inside of the nozzle 17a are filled with the cleaning liquid 35.

Accordingly , the rinsing liquid 39 is sucked into the nozzle 17a before the reagent 37 (dispensing target liquid) is sucked into the nozzle 17a. In this case, the cleaning liquid 35 is not present on the outer wall surface or inner wall surface of the nozzle 17a when the reagent 37 enters the nozzle 17a by the sucking operation. Accordingly, mixture of the cleaning liquid 35 into the reagent 37 sucked into the nozzle 17a is avoidable. Moreover, mixture of the cleaning liquid 35 into the reagent vessel 7 storing the reagent 37 is similarly avoidable.

In case of sample pretreatment for analysis using LC (Liquid Chromatography) or LCMS (Liquid Chromatography Mass Spectrometry), for example, a reagent containing an organic solvent, and a substance such as an internal standard dissolved in the organic solvent is often used. The organic solvent is constituted of, for example, methanol, ethanol, acetonitrile, acetone, or chloroform. When water is mixed with the organic solvent, the water does not diffuse within the organic solvent, but condenses and forms beads of water. This phenomenon becomes particularly prominent when nonpolar organic solvent is used.

When water accumulates within a vessel storing a reagent after repeated dispensation by using an automatic dispensing mechanism, for example, a large amount of condensing water may be sucked in during suction of the reagent, instead of the target reagent. Suction of the water in this manner may considerably lower analysis accuracy.

According to the examples described herein with reference to FIGS. 1 and 2, however, mixture of the cleaning liquid 35 (cleaning water) into the reagent 37 sucked into the nozzle 17a, and mixture of the cleaning liquid 35 into the reagent vessel 7 storing the reagent 37 are avoidable. The structure illustrated in FIGS. 1 and 2 is particularly effective for the case when the main component of the dispensing target liquid is an organic solvent, and when the cleaning liquid is cleaning water.

Moreover, the inside of the pipe 17 is filled not with air but with the cleaning liquid 35 before suction of the rinsing liquid 39 and the reagent 37. This structure prevents damping of operation of the syringe pump 19, thereby increasing dispensing accuracy of the reagent 37.

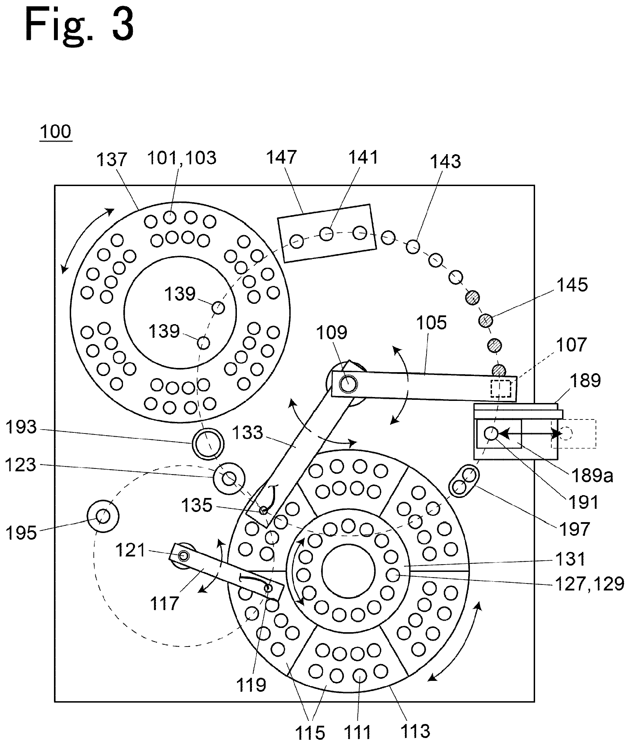

FIG. 3 is a plan view illustrating an example of a pretreatment device incorporating the liquid dispensing device. This pretreatment device is included in an analysis device which automatically analyzes components contained in a biological sample such as whole blood, serum, blood plasma, and urine. The device incorporating the liquid dispensing device described herein is not limited to this pretreatment device.

A pretreatment device 100 executes a necessary pretreatment item for each sample by using a pretreatment kit constituted by a set of prepared separation device 101 and collection vessel 103. The pretreatment device 100 includes a plurality of treatment ports used for executing the respective pretreatment items. A pretreatment kit storing a sample is set on a treatment port selected from the plurality of treatment ports to execute a pretreatment item corresponding to the selected treatment port for the sample stored in the pretreatment kit. The pretreatment items in this context refers to items of pretreatments necessary for executing analysis items specified by a user. The respective treatment ports will be described later.

The separation device 101 and the collection vessel 103 constituting a pretreatment kit is conveyed by a conveyance arm 105 constituting a conveyance mechanism. A holding unit 107 holding the separation device 101 and the collection vessel 103 is provided on the tip side of the conveyance arm 105. The conveyance arm 105 is rotated within the horizontal plane in such a manner that the holding unit 107 draws a circular-arc shift track around a rotation center of a vertical shaft 109 which holds the base end of the conveyance arm 105. The respective treatment ports and other ports corresponding to the conveyance destinations of the separation device 101 and the collection vessel 103 are disposed on the circular-arc shift track drawn by the holding unit 107.

A sample setting unit 113 is provided as a unit on which sample vessels 111 storing samples are set. The sample setting unit 113 includes a plurality of sample racks 115 on which a plurality of the sample vessels 111 are set. A sampling arm 117 is provided in the vicinity of the sample setting unit 113. The sampling arm 117 acquires samples from the sample vessels 111 set on the sample setting unit 113.

The sample setting unit 113 rotates in the horizontal plane in such a manner as to shift the sample racks 115 in the circumferential direction of the sample racks 115. The desired sample vessel 111 is set on a predetermined sampling position by rotation of the sample setting unit 113. The sampling position is a position at which a sample is acquired by a sampling nozzle 119 attached to the tip of the sampling arm 117. The sampling position is provided on the shift track of the sampling nozzle 119.

The sampling arm 117 rotates in the horizontal plane around a rotation center of a vertical shaft 121 holding the base end of the sampling arm 117. The sampling arm 117 also shifts upward and downward in the vertical direction along the vertical shaft 121. The sampling nozzle 119 is held on the tip side of the sampling arm 117 in such a way that the tip of the sampling nozzle 119 faces downward in the vertical direction. The sampling nozzle 119 performs both a shift for drawing a circular-arc shift track in the horizontal plane, and an upward and downward shift in the vertical direction, in accordance with the movement of the sampling arm 117.

A dispensing port 123 is provided at a position on the shift track of the sampling nozzle 119 and on the shift track of the holding unit 107 of the conveyance arm 105. The dispensing port 123 is a port at which a sample is dispensed from the sampling nozzle 119 to the not-used separation device 101. The not-used separation device 101 is set on the dispensing portion 123 by the conveyance arm 105.

A reagent setting unit 131 is provided inside the sample setting unit 113. The sample setting unit 131 is a unit on which reagent vessels 127 and rinsing liquid vessels 129 are set. A reagent arm 133 is provided to acquire a reagent from the reagent vessel 127 set on the reagent setting unit 131. The base end side of the reagent arm 133 is supported by the vertical shaft 109 on which the conveyance arm 105 is also supported. The reagent arm 133 is rotatable in the horizontal plane, and movable upward and downward.

A reagent nozzle 135 is provided at the tip portion of the reagent arm 133 in such a way that the tip of the reagent arm 133 faces downward in the vertical direction. The reagent nozzle 135 shifts in the horizontal plane in such a manner as to draw a circular-arc shift track identical to the circular-arc track of the holding unit 107 of the conveyance arm 105. The reagent nozzle 135 also shifts upward and downward.

The reagent setting unit 131 rotates in the horizontal plane independently from the sample setting unit 113. The plurality of reagent vessels 127 and rinsing liquid vessels 129 are disposed in an annular shape on the sample setting unit 131. The reagent vessels 127 and the rinsing liquid vessels 129 are conveyed in accordance with rotation of the reagent setting unit 131. The desired reagent vessel 127 or rinsing liquid vessel 129 is set at a reagent acquiring position.

The reagent acquiring position is a position at which a reagent or rinsing liquid is sucked in by the reagent nozzle 135 attached to the reagent arm 133. The reagent acquiring position is provided at a position on the shift track of the reagent nozzle 135. The reagent nozzle 135 having sucked in the predetermined rinsing liquid and reagent dispenses the sucked in reagent to the separation device 101 set at the dispensing port 123. The dispensed reagent is added to a sample.

A pretreatment kit setting unit 137 is disposed at a position different from the positions of the sample setting unit 113 and the reagent setting unit 131. A plurality of pretreatment kits, each of which includes the not-used separation device 101 and collection vessel 103 overlapped with each other, are set in an annular shape on the pretreatment kit setting unit 137.

The pretreatment kit setting unit 137 rotates within the horizontal plane to shift the pretreatment kits in the circumferential direction. An arbitrary pretreatment kit is set at a position on the shift track of the holding unit 107 attached to the conveyance arm 105. The conveyance arm 105 holds the not-used separation device 101 or collection vessel 103 set on the shift track of the holding unit 107.

As an example, the user is allowed to set a plurality of types (two types, for example) of the separation devices 101 on the pretreatment kit setting unit 137 as separation devices containing separation agents having separation capabilities different from each other. These plural separation devices 101 are separately used in accordance with the analysis items of the samples. The separation device 101 corresponding to the analysis item specified by the user is selected by the pretreatment kit setting unit 137. Appropriate selection of the separation device 101 is made by a control unit controlling operation of the pretreatment device 100. The control unit will be described later. The analysis items in this context refer to types of analysis successively executed by using samples pretreated by the pretreatment device 100. An analysis device which executes this analysis is constituted by, for example, a liquid chromatograph (LC) or a liquid chromatograph - mass (LC/MS) analyzer.

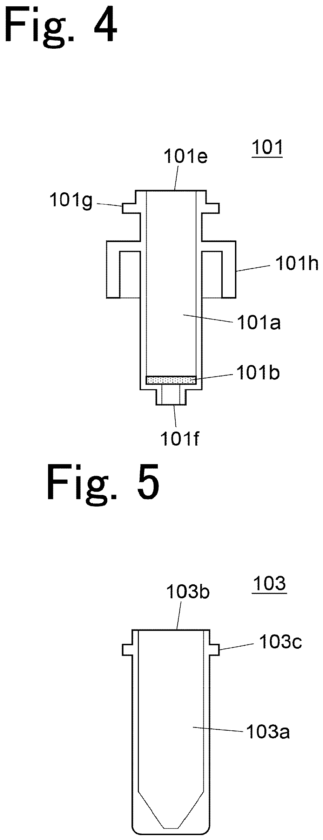

The separation device 101 and the collection vessel 103 constituting the pretreatment kit are hereinafter described with reference to FIGS. 4, 5, 6, and 7.

As illustrated in FIG. 4, the separation device 101 is a cylindrical vessel, for example, which includes an inner space 101a for storing a sample or a reagent. A separation layer 101b is provided on the bottom of the inner space 101a. The separation layer 101b is constituted by a separation agent or a separation film which has a function of selectively separating a particular component contained in a sample. The separation layer 101b transmits a sample, and physically or chemically reacts with a particular component of the sample.

The separation agent constituting the separation layer 101b may be, for example, ion exchange resin, silica gel, cellulose, or activated carbon. On the other hand, the separation film constituting the separation layer 101b may be, for example, a PTFE (polytetrafluoroethylene) film, a nylon film, a polypropylene film, PVDF (polyvinylidene fluoride) film, an acrylic copolymer film, a mixed cellulose film, a nitrocellulose film, a polyether sulfone film, an ion exchange film, or a grass fiber film.

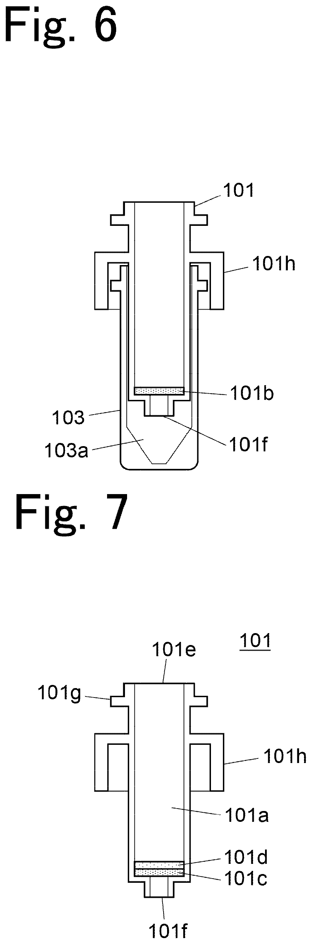

A deproteinizing filter (separation film) for removing protein contained in a sample by filtration may be constituted by PTFE, an acrylic copolymer film, and the like. In this case, a prefilter 101d may be provided on the upper side of a deproteinizing filter 101c to prevent clogging of the deproteinizing filter as illustrated in FIG. 7. The prefilter 101d may be constituted by, for example, a nylon film, a polypropylene film, or a grass fiber film. The prefilter 101d is provided to remove insoluble substances or foreign materials having relatively large particle diameters from a sample. The prefilter 101d thus provided prevents clogging of the deproteinizing filter 101c caused by insoluble substances or foreign materials having relatively large particle diameters.

An opening 101e is formed in the upper surface of the separation device 101 as an opening through which a sample or a reagent is injected into the separation device 101. An extraction port 101f is provided in the lower surface of the separation device 101 as a port through which liquid having passed through the separation layer 101b is extracted. A flange 101g protruding in the circumferential direction is provided in an upper part of the outer circumferential surface of the separation device 101. The flange 101g is equipped to engage with the holding unit 107 detailed below.

A skirt 101h is provided below the flange 101g. The skirt 101h projects in the circumferential direction, and extends downward for a fixed distance to surround the periphery of the outer circumferential surface. The skirt 101h comes into close contact with the edge of a filtration port 139 of the treatment unit to produce a closed space inside the skirt 101h when the separation device 101 and the collection vessel 103 are received by the filtration port 139 of the treatment unit. This structure will be detailed below.

As illustrated in FIGS. 5 and 6, the collection vessel 103 is, for example, a cylindrical vessel. The collection vessel 103 receives a lower part of the separation device 101 inside the collection vessel 103, and collects extraction liquid extracted through the extraction port 101f of the separation device 101. The collection vessel 103 includes an inner space 103a which receives a lower part of the separation device 101 in a portion lower than the skirt 101h. An opening 103b is provided in the upper surface of the collection vessel 103. The opening 103b is an opening through which the lower part of the separation device 101 is inserted.

The collection vessel 103 further includes a flange 103c disposed in an upper part of the outer circumferential surface and protruding in the circumferential direction to engage with the holding unit 107, similarly to the separation device 101. The flange 103c has a shape and an outside diameter identical to the shape and the outside diameter of the flange 101g of the separation device 101. The holding unit 107 attached to the conveyance arm 105 holds the flange 101g of the separation device 101 and the flange 103c of the collection vessel 103 in a similar manner.

An upper part of the collection vessel 103 reaches the inside of the skirt 101h of the separation device 101 when the separation device 101 is inserted into the inner space 103a. The outside diameter of the separation device 101 and the inside diameter of the collection vessel 103 are so designed as to produce a small clearance between the outer circumferential surface of the separation device 101 and the inner circumferential surface of the collection vessel 103 when the separation device 101 is inserted into the inner space 103a of the collection vessel 103. The separation device 101 and the collection vessel 103 are set on the pretreatment kit setting unit 137 in a state that the lower part of the separation device 101 is received by the collection vessel 103 (state illustrated in FIG. 6).

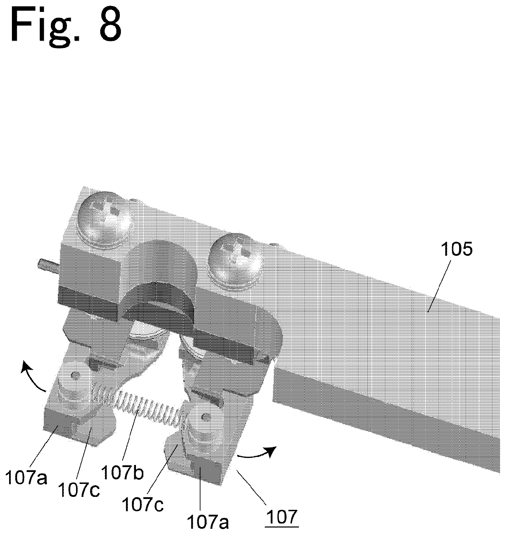

The structure of the holding unit 107 attached to the conveyance arm 105 is hereinafter described with reference to FIG. 8.

The holding unit 107 includes two fingers 107a for holding the flange 101g of the separation device 101 and the flange 103c of the collection vessel 103. Each of the fingers 107a provided at the tip portion of the conveyance arm 105 projects in a direction substantially perpendicular to the conveyance arm 105 and in the horizontal direction.

The two fingers 107a are disposed with a clearance left between each other. The two fingers 107a are connected to each other via a coil spring 107b. The two fingers 107a can freely open and close in the horizontal direction. The two fingers 107a hold the flange 101g of the separation device 101 or the flange 103c of the collection vessel 103 sandwiched between the two fingers 107a by elastic force of the coil spring 107b.

A groove 107c is formed in each of the inner side surfaces of both the fingers 107a to hold the side edge of the flange 101g or 103c so that the flange 101g or 103c is slidable. Each side surface of the fingers 107a facing with each other has a curved shape. Each side surface of the fingers 107a is so curved that the clearance between the fingers 107a becomes smaller than each outside diameter of body portions of the separation device 101 and the collection vessel 103 at the tip portions of the fingers 107a, and becomes equivalent to or larger than each outside diameter of the body portions of the separation device 101 and the collection vessel 103 at a position between the tip portion and the base end portion of the fingers 107a (hereinafter referred to as holding position).

In addition, each side surface of the tip portions of the fingers 107a has a smoothly curved shape so that each tip portion of the fingers 107a is slidable along the shape of the separation device 101 or the collection vessel 103 when the fingers 107a are pressed against the separation device 101 or the collection vessel 103.

When the fingers 107a are pressed against the separation device 101 or the collection vessel 103 in accordance with anticlockwise (left-handed) rotation of the conveyance arm 105, the fingers 107a automatically open along the circumference of the body portion of the separation device 101 or the collection vessel 103. When the separation device 101 or the collection vessel 103 reaches the holding position between the tip portions and the base end portions of the fingers 107a by further rotation of the conveyance arm 105, the fingers 107a automatically close by elastic force of the coil spring 107b. Accordingly, the separation device 101 or the collection vessel 103 is held by the holding unit 107 in a stable condition.

When the separation device 101 or the collection vessel 103 held by the holding unit 107 is set at any of the ports, the lower part of the held separation device 101 or collection vessel 103 is initially inserted into the port receiving the separation device 101 or the collection vessel 103. When the conveyance arm 105 is rotated clockwise (right-handed rotation) in this state, the fingers 107a automatically open along the circumference of the body portion of the separation device 101 or the collection vessel 103 by utilizing the curved side shapes of the fingers 107a. As a result, the holding state of the separation device 101 or the collection vessel 103 is cancelled.

Returning to FIG. 3, the pretreatment device 100 includes, as treatment ports for receiving the pretreatment kit and executing predetermined pretreatment items, the filtration ports 139, stirring ports 141, temperature control ports 143 for the separation device 101, and temperature control ports 145 for the collection vessel 103.

The filtration ports 139 are provided, for example, at two positions inside the pretreatment kit setting unit 137. The stirring ports 141 are provided at, for example, three positions of a stirring unit 147 disposed in the vicinity of the pretreatment kit setting unit 137. The temperature control ports 143 and 145, for example, are respectively arranged at four positions on circular arc.

A negative pressure loading mechanism (described below) is connected to the filtration ports 139. The negative pressure loading mechanism is configured to apply negative pressure to a pretreatment kit set at any of the filtration ports 139.

The stirring unit 147 stirs a sample solution within the separation device 101 set at any of the stirring ports 141. The stirring unit 147 includes a mechanism which individually and periodically operates the respective stirring ports 141 within the horizontal plane.

Each of the temperature control ports 143 and 145 stores the separation device 101 or the collection vessel 103, and adjusts the temperature of the stored separation device 101 or collection device 103 to a constant temperature. The temperature control ports 143 and 145 are provided on, for example, a heat conductive block under temperature control by a heater and a Peltier element.

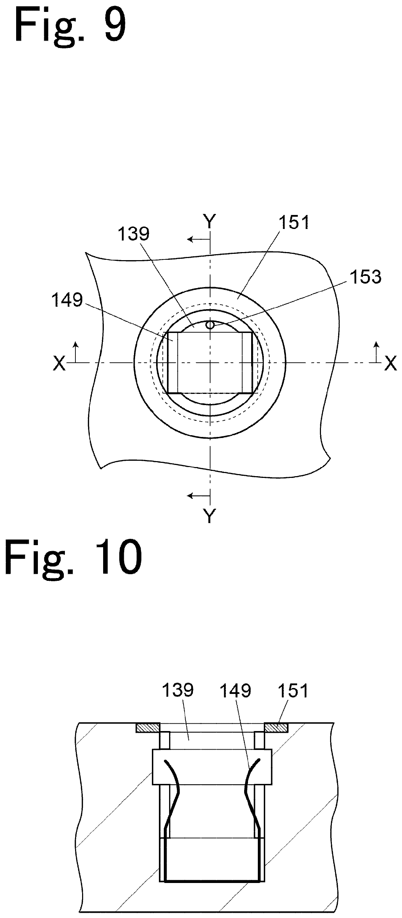

Each of the filtration ports 139 is hereinafter described with reference to FIGS. 9, 10, 11, and 12.

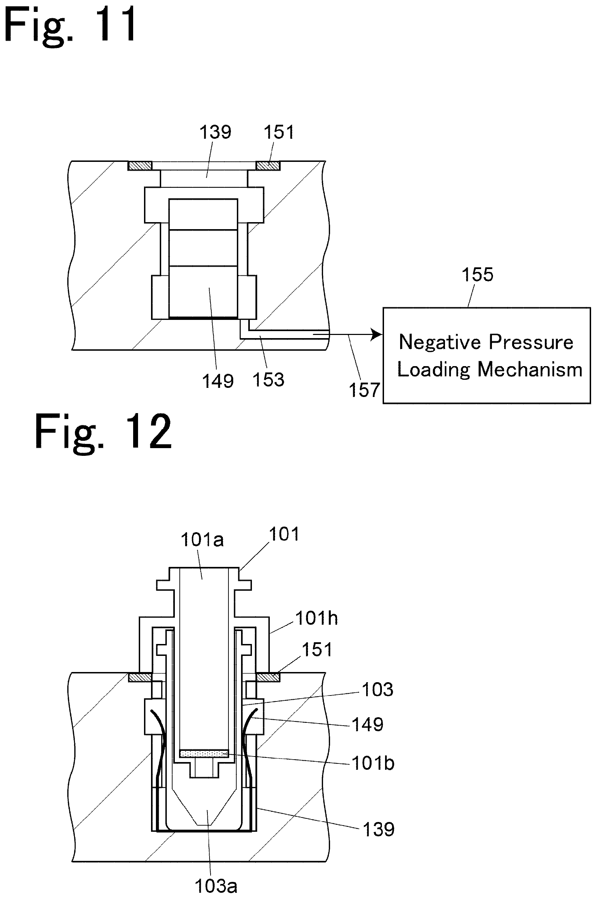

The filtration port 139 is constituted of a recess which receives a pretreatment kit. The collection vessel 103 is initially inserted into the filtration port 139. Thereafter, the lower part of the separation device 101 is inserted in the inner space 103a of the collection vessel 103 received by the filtration port 139 (see FIG. 12).

A collection vessel holding member 149 is provided inside the filtration port 139 (see FIGS. 10 and 12). The collection vessel holding member 149 holds the collection vessel 103 in a central portion of the collection vessel holding member 149 by applying a uniform press to the collection vessel 103 in two directions opposed to each other via the collection vessel 103. The collection vessel holding member 149 is constituted of, for example, a U-shaped metal component.

The collection vessel holding member 149 includes two flat spring portions extending upward. Each of the two flat spring portions of the collection vessel holding member 149 has a curved or bended shape recessed inward so that the clearance between the flat spring portions becomes the minimum at an intermediate position between the, for example, upper end and the lower end of the flat spring portions. The clearance between the two flat spring portions is larger than the outside diameter of the collection vessel 103 at the upper end and the lower end of the flat spring portions, and becomes smaller than the outside diameter of the collection vessel 103 at the portion corresponding to the smallest clearance.

When the collection vessel 103 is inserted into the filtration port 139, the two flat spring portions of the collection vessel holding member 149 open in accordance with lowering of the collection vessel 103, and hold the collection vessel 103 in the central portion of the filtration port 139 by elastic force of the flat spring portions.

The collection vessel holding member 149 is fixed inside the filtration port 139. This structure prevents a rise of the collection vessel holding member 149 together with the collection vessel 103 when the collection vessel 103 is taken out.

A ring-shaped sealing member 151 having elasticity is provided at the edge of the upper surface opening of the filtration port 139. The sealing member 151 is fitted into a recess formed in the circumference of the edge of the upper surface opening of the filtration port 139. The sealing member 151 is made of , for example, elastic material such as silicon rubber and EPDM (ethylene-propylene-diene rubber).

When the collection vessel 103 and the separation device 101 are set at the filtration port 139, the lower end of the skirt 101h of the separation device 101 comes into contact with the sealing member 151. As a result, a space surrounded by the inner side surface of the skirt 101h and the inner side surface of the filtration port 139 is closed.

A pressure reduction channel 153 communicates with the bottom surface of the filtration port 139 (see FIGS. 9 and 11) . A channel 157 of a negative pressure loading mechanism 155 is connected to the channel 153. The negative pressure loading mechanism 155 applies negative pressure to the filtration port 139 side by using a vacuum pump. The specific structure of the negative pressure loading mechanism 155 will be detailed later.

The pressure inside the filtration port 139 is reduced by the negative pressure loading mechanism 155 in the state that the separation device 101 and the collection vessel 103 are received by the filtration port 139. The pressure of the space surrounded by the inner side surface of the skirt 101h and the inner side surface of the filtration port 139 becomes negative.

The inner space 103a of the collection vessel 103 communicates with the foregoing space having negative pressure. The upper surface of the separation device 101 is opened to the air. In this case, a pressure difference is produced between the inner space 101a of the separation device 101 and the inner space 103a of the collection vessel 103 separated by the separation layer 101b. Accordingly, only a component allowed to pass through the separation layer 101b in the sample solution stored in the inner space 101a of the separation device 101 is extracted into the inner space 103a of the collection vessel 103 by the presence of the pressure difference thus produced.

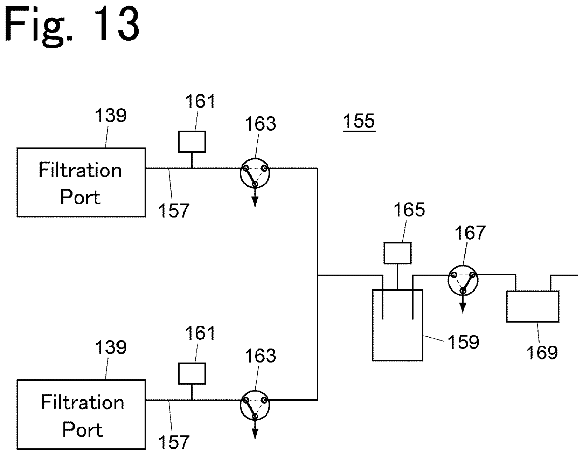

FIG. 13 illustrates an example of the negative pressure loading mechanism 155.

The two filtration ports 139 are connected to a common vacuum tank 159 via the channel 157 provided for each of the filtration ports 139. A pressure sensor 161 and a three-way valve 163 are provided for each of the channels 157. The two channels 157 are joined to each other between the three-way valves 163 and the vacuum tank 159.

Each of the pressure sensors 161 is used to detect pressure inside the corresponding filtration port 139. Each of the three-way valves 163 switches between a connecting state connecting the filtration port 139 and the vacuum tank 159, an opening state opening the filtration port 139 side of the channel 157 to the air (state illustrated in FIG. 13), and a closing state closing the filtration port 139 side end of the channel 157.

A pressure sensor 165 is connected to the vacuum tank 159. On the other hand, a vacuum pump 169 is connected to the vacuum tank 159 via a three-way valve 167. The vacuum pump 169 is connected to the vacuum tank 159 as necessary to control the pressure inside the vacuum tank 159.

For executing extraction treatment of a sample at any one of the filtration ports 139, the corresponding filtration port 139 and the vacuum tank 159 are connected via the three-way valve 163. The pressure of the filtration port 139 detected by the pressure sensor 161 is adjusted to a predetermined value, whereafter the three-way valve 163 is switched to close the filtration port 139 side end of the channel 157. As a result, the inside of the filtration port 139 becomes a closed system where the sample is extracted in the pressure-reduced state maintained within the filtration port 139.

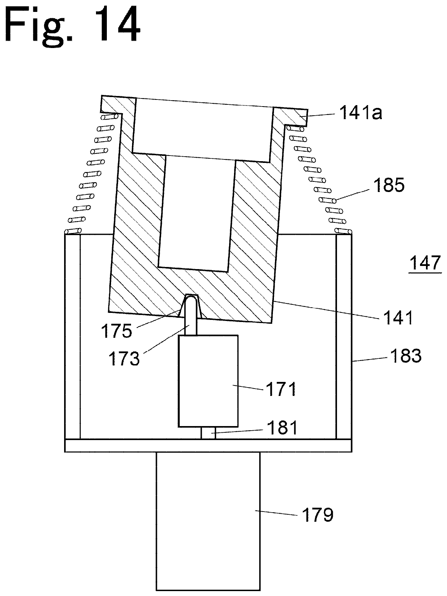

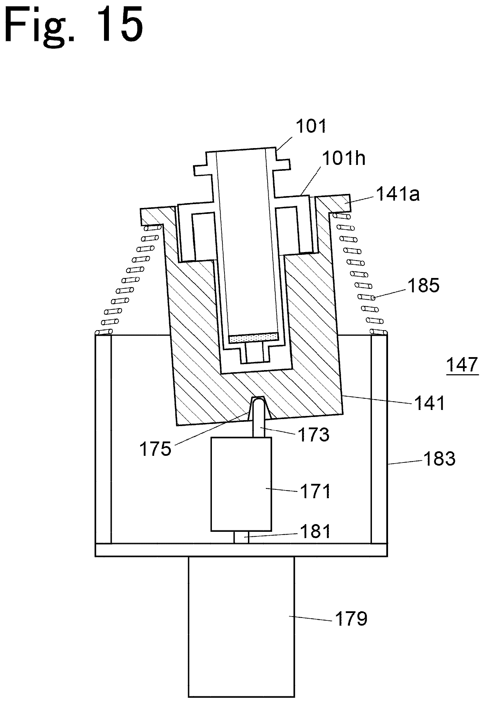

The structure of the stirring unit 147 is hereinafter described with reference to FIGS. 14 and 15. FIGS. 14 and 15 illustrates one of the stirring ports 141 of the stirring unit 147.

The stirring port 141 of the stirring unit 147 is a vessel receiving the separation device 101. The stirring port 141 is driven by a stirring mechanism provided in a lower part of the stirring port 141.

The stirring mechanism for driving the stirring port 141 is now described. A rotation body 171 is disposed below the stirring port 141. A driving shaft 173 extending in the vertical direction is attached to a position deviated from the center of the upper surface of the rotation body 171. The upper end of the driving shaft 173 is inserted into a support hole 175 formed in the lower surface of the stirring port 141. The rotation body 171 is supported by a rotation shaft 181 rotated by a motor 179. The rotation body 171 rotates by driving of the motor 179, whereby the driving shaft 173 revolves within the horizontal plane.

A support frame 183 is attached to the motor 179. The support frame 183 includes a side wall extending upward in the vertical direction from the motor 179 side. One end of an elastic member 185 such as a coil spring is attached to the upper end of the side wall. The other end of the elastic member 185 is attached to the upper outer surface of the stirring port 141. The elastic member 185 elastically holds a flange 141a provided on an upper part of the stirring port 141. A plurality of the elastic members 185 are provided at a plurality of positions (such as four positions) formed at equal intervals in the circumference of the stirring port 141.

As illustrated in FIG. 15, the separation device 101 storing a sample and a reagent is received by the stirring port 141. When the motor 179 is driven, the driving shaft 173 revolves within the horizontal plane, whereby the lower end of the separation device 101 revolves accordingly. As a result, the inside of the separation device 101 is stirred to mix the sample and the reagent.

Returning to FIG. 3, the pretreatment device 100 includes a sample transfer device 189. The sample transfer device 189 is provided to transfer an extracted sample of the collection vessel 103 toward a sample injection device (such as auto-sampler) disposed adjacent to the pretreatment device 100.

The sample transfer device 189 includes a shift unit 189a. The shift unit 189a is shifted in one direction (direction indicated by arrows in FIG. 3) within the horizontal plane by a driving mechanism including a rack-and-pinion mechanism. A transfer port 191 provided in the upper surface of the shift unit 189a is a port at which the collection vessel 103 storing an extracted sample is set.

While the sample transfer device 189 is not transferring a sample to the sample injection device, the transfer port 191 is disposed at a position on the shift track of the holding unit 107 of the conveyance arm 105 (position indicated by a solid line in the figure) . This position corresponds to a position where the collection vessel 103 is set at the transfer port 191 by the conveyance arm 105, and where the collection vessel 103 is collected from the transfer port 191.

During transfer of a sample to the sample injection device, the collection vessel 103 storing an extracted sample is set at the transfer port 191. The shift unit 189a is moved to shift the collection vessel 103 and the shift unit 189a to a position on the sample injection device side adjacent to the collection vessel 103 and the shift unit 189a (position indicated by a broken line in the figure). This position corresponds to a position where a sampling nozzle provided on the sample injection device sucks in the sample from the collection vessel 103.

After suction of the sample by the sample injection device is completed, the shift unit 189a is shifted to the original position (position indicated by the solid line in the figure) . Thereafter, the collection vessel 103 is collected by the conveyance arm 105. The used collection vessel 103 is conveyed to a disposal port 193 by the conveyance arm 105 for disposal.

The disposal port 193 is disposed at a position on the shift track of the holding unit 107 of the conveyance arm 105. The disposal port 193 is located in the vicinity of the dispensing port 123, for example. The used separation device 101 and collection vessel 103 are disposed of at the disposal port 193.

A cleaning port 195 provided for cleaning the sampling nozzle 119 is disposed at a position on the shift track of the sampling nozzle 119. Moreover, a cleaning port 197 provided for cleaning the reagent nozzle 135 is disposed at a position on the shift track of the reagent nozzle 135.

A sampling dispensing mechanism including the sampling arm 117 and the sampling nozzle 119 has a mechanism similar to the mechanism of the dispensing unit 3 and the cleaning unit 5 of the liquid dispensing device 1 illustrated in FIG. 2. Similarly, a reagent dispensing mechanism including the reagent arm 133 and the reagent nozzle 135 has a mechanism similar to the mechanism of the dispensing unit 3 and the cleaning unit 5 of the liquid dispensing device 1 illustrated in FIG. 2.

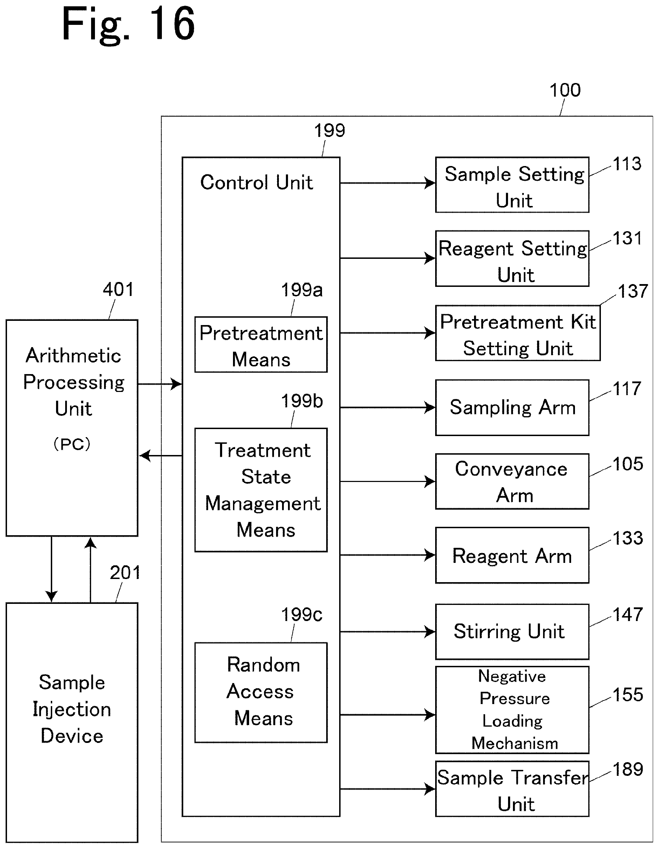

A control system of the pretreatment device 100 is hereinafter described with reference to FIG. 16. In the following description, a "port" refers to any one of the filtration ports 139, the dispensing port 123, the stirring ports 141, the temperature control ports 143 and 145, and the transfer port 191, for receiving the separation device 101 or the collection vessel 103.

Operations of the sample setting unit 113, the reagent setting unit 131, the pretreatment kit setting unit 137, the sampling arm 117, the conveyance arm 105, the reagent arm 133, the stirring unit 147, the negative pressure loading mechanism 155, and the sample transfer device 189 are controlled by a control unit 199. The control unit 199 is realized by a computer provided within the pretreatment device 100, and software executed by the computer.

An arithmetic processing unit 401 is connected to the control unit 199. The arithmetic processing unit 401 is realized by, for example, a personal computer (PC) or a dedicated computer. The user manages the pretreatment device 100 via the arithmetic processing unit 401.

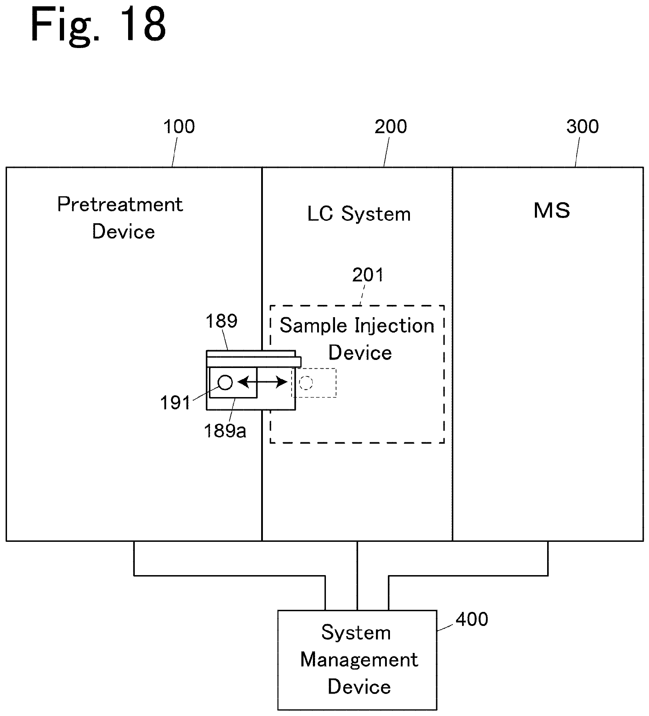

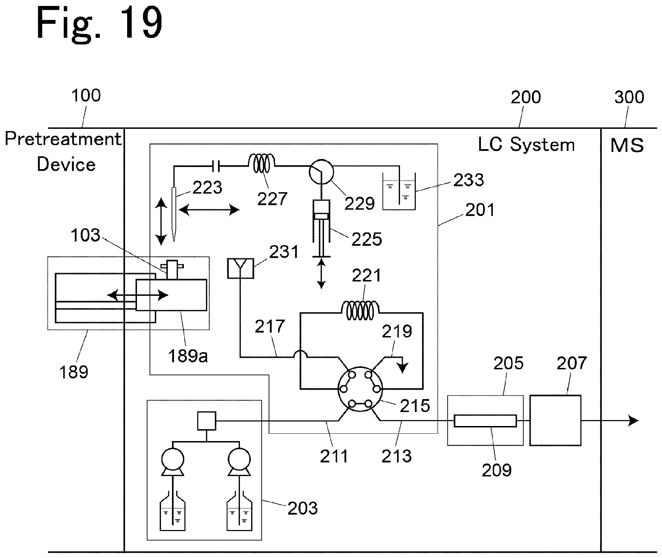

A sample injection device 201 is also connected to the arithmetic processing unit 401. The sample injection device 201 is included in a liquid chromatograph system (hereinafter referred to as LC system) 200 which analyzes a sample pretreated by the pretreatment device 100 (see FIG. 18 and 19) . The sample injection device 201 is configured to operate in linkage with operation of the pretreatment device 100. FIG. 16 illustrates only the sample injection device 201 of the LC system 200.

The control unit 199 includes a pretreatment means 199a, a treatment state management means 199b, and a random access means 199c. Each of these means is a function obtained by the computer constituting the control unit 199 executing software.

As described above, the plurality of sample vessels 111 are set on the sample setting unit 113. Samples stored in the respective sample vessels 111 are sequentially dispensed to the separation devices 101. The separation devices 101 are conveyed to the ports corresponding to pretreatment items to be executed for the stored samples.

The random access means 199c checks a treatment item to be executed for each of the samples. The random access means 199c further checks vacancy of the port corresponding to the treatment item. When the port is vacant, the target separation device 101 or collection vessel 103 is conveyed to the port. When the port corresponding to the treatment item is not vacant, the target separation device 101 or collection vessel 103 is conveyed to the port as soon as the port becomes vacant. The random access means 199c further checks a treatment state of each port, and controls operation of the conveyance arm 105 to convey the separation device 101 after completion of treatment at a corresponding port to another port performing next treatment.

The treatment state management means 199b is configured to manage vacancy and a treatment state for each port. The vacancy of the respective ports may be managed by memorizing which port has received the separation device 101 or the collection vessel 103.

A treatment state of each port may be managed based on whether or not time required for treatment executed at the port has elapsed after the separation device 101 or the collection vessel 103 is set at the port. However, treatment at the transfer port 191 (sample suction by the sample injection device 201) may be managed based on whether or not a signal indicating completion of sample suction has been received from the sample injection device 201.

A sensor may be provided on each port for detecting whether or not the separation device 101 or the collection vessel 103 has been set at the corresponding port. The treatment state management means 199b may manage vacancy of each port based on a signal received from this sensor.

The pretreatment means 199a is configured to execute predetermined treatment at each port when the separation device 101 or the collection vessel 103 is set at the corresponding port.

The pretreatment device 100 includes the two filtration ports 139, the three stirring ports 141, the four temperature control ports 143, and the four temperature control ports 145, for example. An order of priority is set for the ports executing the same treatment.

The random access means 199c is configured to use ports in the descending order of priority. When the two filtration ports 139 are both vacant at the time of filtration of a sample, for example, the collection vessel 103 is set at the filtration port 139 having higher priority. The separation device 101 is further set at a position above the corresponding collection vessel 103.

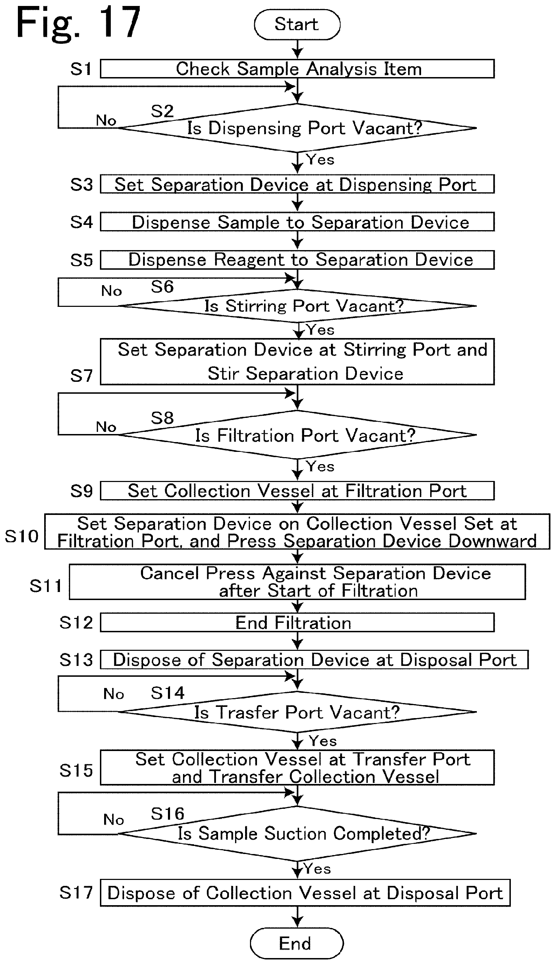

An example of pretreatment operation performed by the pretreatment device 100 for one sample is hereinafter described with reference to a flowchart shown in FIG. 17 in conjunction with FIGS. 3 and 16. The flowchart shown in FIG. 17 describes only a flow of pretreatment for one sample. This pretreatment operation is executed simultaneously and in parallel with, and also independently from pretreatment operations for other samples. The phrase "treatment executed simultaneously and in parallel with, and also independently from" in this context refers to an operation which conveys the separation device 101 or the collection vessel 103 storing a sample by using the conveyance arm 105, and independently executes treatment for the sample even while executing filtration or stirring for another sample at ports such as the filtration port 139 or the stirring port 141.

An analysis item specified by the user for a sample beforehand (step S1) is initially checked by the control unit 199. A pretreatment item necessary for executing the analysis item is checked by the control unit 199.

It is checked whether or not the dispensing port 123 is vacant (step S2) . When the dispensing port 123 is vacant, the conveyance arm 105 takes out the not-used separation device 101 for storing the sample from the pretreatment kit setting unit 137, and sets the separation device 101 at the dispensing port 123 (step S3). The pretreatment kit setting unit 137 sets the separation devices 101 and the collection vessels 103 in a state that each of the separation device 101 overlaps with the corresponding collection vessel 103 (state illustrated in FIG. 6). The conveyance arm 105 holds only the separation device 101 on the upper side by using the holding unit 107, and conveys the separation device 101 to the dispensing port 123.

The sample is dispensed to the separation device 101 set at the dispensing port 123 via the sampling nozzle 119 (step S4). This sample dispensing operation is performed similarly to the liquid dispensing operation described with reference to FIG. 21, for example. Alternatively, the sample dispensing operation may be performed similarly to the liquid dispensing operation described with reference to FIGS. 1 and 2. In this case, rinsing liquid vessels storing rinsing liquid are set on the sample setting unit 113 as well as the sample vessels 111 storing the samples. The sampling nozzle 119 having dispensed the sample to the separation device 101 is cleaned at the cleaning port 195 to prepare for next sample dispensation.

A reagent corresponding to pretreatment to be executed for the sample dispensed to the separation device 101 is dispensed via the reagent nozzle 135 at the dispensing port 123 (step S5) . This reagent dispensing operation is, for example, performed similarly to the liquid dispensing operation described with reference to FIGS. 1 and 2.

Initially, the reagent nozzle 135 and the rinsing liquid vessel 129 are set at a suction position. The reagent nozzle 135 is lowered to immerse the tip portion of the reagent nozzle 135 in rinsing liquid, and suck the rinsing liquid into the reagent nozzle 135. The reagent nozzle 135 is raised, whereafter air is sucked into the reagent nozzle 135. The reagent setting unit 131 is rotated to set the reagent vessel 127 below the reagent nozzle 135.

The reagent nozzle 135 is lowered to immerse the tip portion of the reagent nozzle 135 and suck the reagent into the reagent nozzle 135. The reagent nozzle 135 is raised, in which condition the reagent arm 133 is rotated to set the reagent nozzle 135 above the dispensing port 123.

The reagent nozzle 135 is lowered to insert the tip portion of the reagent nozzle 135 into the inner space 101a of the separation device 101 and start dispensation of the reagent. The reagent arm 133 is operated to remove the reagent nozzle 135 from the separation device 101 and shift the reagent nozzle 135 to the cleaning port 197. Disposal of the reagent and the rinsing liquid, and cleaning of the reagent nozzle 135 are performed at the cleaning port 197.

As illustrated in FIG. 3, the shift track circle of the reagent nozzle 135, and the circle on which the reagent vessel 127 and the rinsing liquid vessel 129 of the reagent setting unit 131 are arranged cross each other at two points in the plan view. Accordingly, two suction positions may be provided for suction of the reagent or the rinsing liquid. The control unit 199 may allow the reagent nozzle 135 to sequentially suck in the rinsing liquid and the reagent disposed at the different suction positions.

As an example, the reagent vessel 127 disposed at one of the suction positions, and the rinsing liquid vessel 129 disposed at the other suction position are simultaneously realized. When the tip portion of the reagent nozzle 135 is sequentially inserted into the rinsing liquid vessel 129 and the reagent vessel 127 disposed in this condition by operation of the reagent arm 133, the rinsing liquid and the reagent are sequentially sucked into the reagent nozzle 135 without rotation of the reagent setting unit 131.

Dispensation of the reagent to the separation device 101 may be performed before dispensation of the sample to the separation device 101. The reagent dispensation port used for dispensation of the reagent may be provided at a position different from the dispensing port 123. In this case, the separation device 101 is set at this reagent dispensing port by using the conveyance arm 105 to dispense the reagent at the corresponding position.

After dispensation of the sample and the reagent to the separation device 101, vacancy of the stirring ports 141 is checked (step S6).

When any one of the stirring ports 141 is vacant, the separation device 101 positioned at the dispensing port 123 is set at the vacant stirring port 141 by using the conveyance arm 105 for stirring (step S7). This stirring treatment continues for a fixed period determined beforehand to mix the sample and the reagent contained in the separation device 101.

Vacancy of the filtration ports 139 is checked during the stirring treatment (step S8).

When any one of the filtration ports 139 is vacant, the collection vessel 103 is set at the vacant filtration port 139 by using the conveyance arm 105 (step S9). The collection vessel 103 set at the filtration port 139 is the collection vessel 103 paired with the separation device 101 under stirring at the stirring port 141. In addition, the collection vessel 103 is the vessel overlapped with the separation device 101 under stirring and set on the pretreatment kit setting unit 137. The separation device 101 and the collection vessel 103 for another sample may be conveyed by the conveyance arm 105 during the stirring treatment.

After completion of the stirring treatment at the stirring unit 147, the conveyance arm 105 conveys the separation device 101 to the filtration port 139 at which the collection vessel 103 is set. The separation device 101 is set at a position above the collection vessel 103 so that the lower part of the separation device 101 is inserted into the collection vessel 103 (state illustrated in FIG. 12, step S10).

During this step, the separation device 101 is lowered to a height at which the lower end of the skirt 101h comes a position slightly lower (about 0.1 mm lower, for example) than the height of the upper surface of the sealing member 151 provided around the filtration port 139. The skirt 101h is pressed by the sealing member 151. As a result, the lower end of the skirt 101h of the separation device 101 crushes the sealing member 151, wherefore airtightness between the lower end of the skirt 101h and the sealing member 151 improves. The conveyance arm 105 maintains the downward pressing state of the separation device 101 until the pressure inside the filtration port 139 becomes a negative pressure after a start of the following filtration treatment.

The filtration treatment starts in the state that the inside of the filtration port 139 is kept airtight by the separation device 101 set on the collection vessel 103 at the filtration port 139. The filtration treatment is performed by reducing the pressure inside the filtration port 139 to a negative pressure by using the negative pressure loading mechanism 155 in the state that the filtration port 139 receives the separation device 101 and the collection vessel 103. The negative pressure inside the filtration port 139 is kept for a fixed period to filter the sample of the separation device 101 and extract the sample into the collection vessel 103 (step S11).

When it is detected by the pressure sensor 161 (see FIG. 13) that the pressure inside the filtration port 139 has become a negative pressure after the start of the filtration treatment, the conveyance arm 105 cancels the downward press against the separation device 101 and the hold of the separation device 101. After the hold of the separation device 101 is cancelled, the conveyance arm 105 is allowed to convey the other separation devices 101 and collection vessels 103.

The downward press against the separation device 101 and the hold of the separation device 101 by the conveyance arm 105 need not be canceled in response to a detection signal generated by the pressure sensor 161. This cancelling operation by the conveyance arm 105 may be performed, for example, after an elapse of a predetermined period from the start of the filtration treatment.

Temperature treatment not included in this pretreatment operation may be performed after stirring of the sample within the separation device 101. This temperature treatment is, for example, treatment which leaves the sample in the separation device 101 for a fixed period at a constant temperature. In this case, vacancy of the temperature control ports 143 is checked after completion of the stirring treatment. When any one of the temperature control ports 143 is vacant, the separation device 101 is set at the vacant temperature control port 143. After an elapse of the fixed period, the separation device 101 is shifted from the temperature control port 143 to a position above the collection vessel 103 at the filtration port 139.

After completion of the filtration treatment for the sample (step 12), the three-way valve 163 (see FIG. 13) is switched to change the pressure inside the filtration port 139 to the atmospheric pressure. The used separation device 101 is taken out from the filtration port 139 by using the holding unit 107 of the conveyance arm 105, and disposed of at the disposal port 193 (step S13).

Thereafter, vacancy of the transfer port 191 is checked (step S14). When the transfer port 191 is vacant, the collection vessel 103 positioned at the filtration port 139 is conveyed to the sample transfer device 189 by using the conveyance arm 105, and is set at the transfer port 191.

After the collection vessel 103 is set at the transfer port 191, the shift unit 189a shifts to the position on the LC system 200 side (position indicated by the broken line in FIG. 3) (see FIGS. 18 and 19). In this condition, the collection vessel 103 is transferred to the sample injection device 201 of the LC system 200 (step S15).

Temperature treatment which leaves the sample extracted in the collection vessel 103 for a fixed period at a constant temperature may be performed after completion of the filtration treatment for the sample. In this case, vacancy of the temperature control ports 145 is checked. When any one of the temperature control ports 145 is vacant, the collection vessel 103 is set at the vacant temperature control port 145. After an elapse of the fixed period, the collection vessel 103 is shifted from the temperature control port 145 to the transfer port 191, and is further transferred to the sample injection device 201 by the sample transfer device 189.

The sample injection device 201 sucks in the sample via the sampling nozzle from the collection vessel 103 transferred by the sample transfer device 189 (step S16). The shift unit 189a stops at the position on the LC system 200 side until completion of sample suction by the sample injection device 201. After completion of suction of the sample, the shift unit 189a returns to the original position (position indicated by the solid line in FIG. 3).

After completion of transfer of the sample, the used collection vessel 103 is collected from the transfer port 191 by using the conveyance arm 105, and is disposed of at the disposal port 193 (step S17).

Positions and numbers of ports included in the pretreatment device 100, such as the filtration ports 139, the stirring ports 141, the temperature control ports 143 and 145, and the transfer port 191 may be changed as necessary. The pretreatment device 100 is presented only as an example of the liquid dispensing device. The liquid dispensing device described herein is not limited to the pretreatment device 100.

An example of an analysis system including the pretreatment device 100 is hereinafter described with reference to FIG. 18.

The LC system 200 is provided adjacent to the pretreatment device 100. A mass spectrometer (MS) 300 is further provided adjacent to the LC system 200. Operations of the pretreatment device 100, the LC system 200, and the mass spectrometer 300 are managed by a common system management device 400.

The system management device 400 includes software for control and management of the pretreatment device 100, the LC system 200, and the mass spectrometer 300. The system management device 400 is realized by, for example, a dedicated computer or a general-purpose PC. The system management device 400 includes the function of the arithmetic processing unit 401 illustrated in FIG. 16.

The LC system 200 includes the sample injection device 201. The sample injection device 201 acquires a sample pretreated by the pretreatment device 100, and injects the sample into an analysis channel of a liquid chromatograph. As described above, the pretreatment device 100 includes the sample transfer device 189 which transfers the collection vessel 103 storing the pretreated sample toward the LC system 200 side.

The sample injection device 201 acquires the sample from the collection vessel 103 transferred to the LC system 200 side by the sample transfer device 189. When the shift unit 189a of the sample transfer device 189 shifts toward the LC system 200 side, the collection vessel 103 set at the transfer port 191 of the shift unit 189a comes to a predetermined position within the sample injection device 201.

When the collection vessel 103 is set at the predetermined position of the sample injection device 201, a signal indicating this state is transmitted to the sample injection device 201 via the system management device 400, for example. The sample injection device 201 starts operation for acquiring the sample from the collection vessel 103. The sample transfer device 189 holds the collection vessel 103 at the predetermined position within the sample injection device 201 until completion of acquisition of the sample by the sample injection device 201.

After completion of acquisition operation of the sample by the sample injection device 201, a signal indicating this state is transmitted to the pretreatment device 100 via the system management device 400, for example. The sample transfer device 189 shifts the shift unit 189a toward the pretreatment device 100 side to return the collection vessel 103 to a predetermined position within the pretreatment device 100. The collection vessel 103 returned to the pretreatment device 100 is conveyed to the disposal port 193 by the conveyance arm 105 for disposal.

An example of the LC system 200 is hereinafter described with reference to FIG. 19.

The LC system 200 includes a liquid sending device 203, a column oven 205, and a detector 207, and others as well as the sample injection device 201.

The liquid sending device 203 is a device which sends, for example, two types of solvents to a mixer by using a liquid sending pump and sends a solution containing these solvents mixed by the mixer as a mobile phase. The column oven 205 includes an analysis column 209 which separates a sample into components. The detector 207 detects sample components separated by the analysis column 209. The detector 207 is, for example, an ultraviolet absorbing detector.

The liquid sending device 203 is connected to the upstream end of an upstream analysis channel 211. The liquid sending device 203 sends the mobile phase to the sample injection device 201 via the upstream analysis channel 211. The analysis column 209 and the detector 207 are provided in a downstream analysis channel 213. The upstream analysis channel 211 and the downstream analysis channel 213 are connected to ports of a two-position valve 215 provided on the sample injection device 201. The upstream analysis channel 211 and the downstream analysis channel 213 are connected to each other via the two-position valve 215.

The two-position valve 215 includes six ports. One end of a sample introduction channel 217, one end of a drain channel 219, and one and the other ends of a sample loop 221, as well as the upstream analysis channel 211, the downstream analysis channel 213, are connected to the corresponding ports of the two-position valve 215.

The two-position valve 215 connects the sample introduction channel 217, the sample loop 221, and the drain channel 219 in this order in series. In this case, the upstream analysis channel 211 and the downstream analysis channel 213 connect to each other via the two-position valve 215 (state illustrated in FIG. 19).

On the other hand, the two-position valve 215 connects the upstream analysis channel 211, the sample loop 221, and the downstream analysis channel 213 in this order in series. In this case, the sample introduction channel 217 and the drain channel 219 connect to each other via the two-position valve 215.

The sample injection device 201 includes a needle 223 and a syringe pump 225. The needle 223 sucks in and discharges liquid through the tip of the needle 223. The needle 223 is connected to the syringe pump 225 via a sample loop 227 and a channel switching valve 229.

The needle 223 is shifted in the horizontal direction and the vertical direction by a not-shown shift mechanism. The needle 223 acquires a sample from the collection vessel 103 transferred to the LC system 200 by the sample transfer device 189 of the pretreatment device 100, and injects the sample into an injection port 231. The injection port 231 is connected to the sample introduction channel 217.

The syringe pump 225 is further connected to a cleaning liquid vessel 233 in accordance with switching of the channel switching valve 229. The cleaning liquid vessel 233 stores cleaning liquid. During cleaning, the syringe pump 225 having sucked in cleaning liquid from the cleaning liquid vessel 233 is connected to the needle 223. The needle 223 is further connected to the injection port 231. The sample introduction channel 217 is further connected to the drain channel 219 via the sample loop 221. In this condition, the cleaning liquid is sent from the syringe pump 225. The sample loop 227, the needle 223, the sample introduction channel 217, and the sample loop 221 are cleaned by using this cleaning liquid.

At the time of acquisition of a sample from the collection vessel 103, the tip of the needle 223 is inserted into the collection vessel 103. In this condition, the syringe pump 225 performs sucking operation. As a result, the sample is sucked into the needle 223 and the sample loop 227.

After suction of the sample, the needle 223 is removed from the collection vessel 103, and connected to the injection port 231. In this condition, the syringe pump 225 performs discharging operation. As a result, the sample sucked into the sample loop 227 is injected through the injection port 231. At this time, the two-position valve 215 connects the sample introduction channel 217, the sample loop 221, and the drain channel 219 in series. The sample injected through the injection port 231 is injected into the sample loop 221.

After injection of the sample into the sample loop 221, the two-position valve 215 is switched to connect the upstream analysis channel 211, the sample loop 221, and the downstream analysis channel 213 in series. The sample within the sample loop 221 is guided into the analysis column 209 by a mobile phase coming from the liquid sending device 203, and is separated into respective components by the analysis column 209. The respective components separated by the analysis column 209 are detected by the detector 207, and introduced into the mass spectrometer 300.

Signals obtained by the detector 207 and the mass spectrometer 300 are received by the system management device 400 (se FIG. 18). Arithmetic processing such as quantification and composition analysis of the respective components separated by the analysis column 209 is performed by software incorporated in the system management device 400, and hardware executing the software such as a CPU.

A reference example of a liquid dispensing method is hereinafter described.

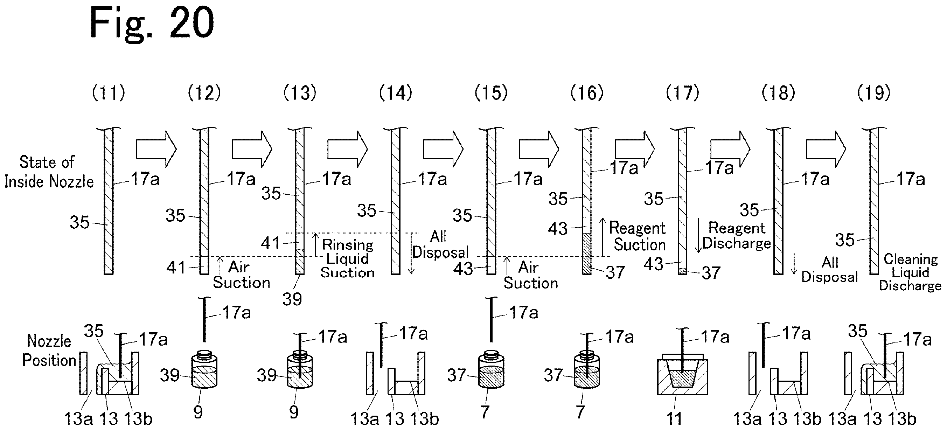

FIG. 20 is a schematic view illustrating a series of processes for suction, discharge, and cleaning of dispensing target liquid as a reference example of a liquid dispensing method. Numbers in parentheses (11) through (19) in FIG. 21 correspond to step numbers (11) through (19) described below. This reference example is hereinafter described in conjunction with reference to FIG. 2.

Step (11) : The nozzle 17a is cleaned in a manner similar to the step (1) described with reference to FIG. 1. The inside of the pipe 17 and the inside of the nozzle 17a are filled with the cleaning liquid 35.

Step (12): The tip of the nozzle 17a is disposed above the rinsing liquid vessel 9 in a manner similar to step (2) described with reference to FIG. 1. A predetermined amount of the air 41 is sucked into the nozzle 17a through the tip of the nozzle 17a.

Step (13) : A predetermined amount of the rinsing liquid 39 is sucked into the nozzle 17a in a manner similar to step (3) described with reference to FIG. 1.

Step (14) : The arm 23 is shifted to remove the tip of the nozzle 17a from the rinsing liquid vessel 9. The arm 23 is further shifted to move the tip of the nozzle 17a to a position above the disposal position 13a of the cleaning port 13. All of the rinsing liquid 39 within the nozzle 17a is disposed of by discharging operation of the syringe pump 19. In this case, the cleaning liquid 35 again adheres to a portion of the inner wall of the nozzle 17a rinsed by the rinsing liquid 39.

Step (15): The tip of the nozzle 17a is disposed above the reagent vessel 7 in a manner similar to step (4) described with reference to FIG. 1. A predetermined amount of the air 43 is sucked into the nozzle 17a.

Step (16): A predetermined amount of the reagent 37 is sucked into the nozzle 17a in a manner similar to step (5) described with reference to FIG. 1. The cleaning liquid 35 and the reagent 37 within the nozzle 17a are separated from each other via the air 43.

step (17) : A predetermined amount of the reagent 37 within the nozzle 17a is discharged into the discharge vessel 11 in a manner similar to step (6) described with reference to FIG. 1. The reagent 37 remains within the nozzle 17a.

Step (18): All of the reagent 37 remaining within the nozzle 17a is disposed of at the disposal position 13a of the cleaning port 13 in a manner similar to step (7) described with reference to FIG. 1.

Step (19): The inside of the nozzle 17a, and the inner wall surface and the outer wall surface of the tip portion of the nozzle 17a are cleaned in a manner similar to step (8) described with reference to FIG. 1. The inside of the pipe 17 and the inside of the nozzle 17a are filled with the cleaning liquid 35.

According to this reference example, the cleaning liquid 35 again adheres to the rinsed portion within the nozzle 17a during discharge of the rinsing liquid 39 in step (14) described above. Accordingly, the cleaning liquid 35 may be mixed with the reagent 37 sucked into the nozzle 17a in step (16) described above. In step (13), the outer wall surface of the tip portion of the nozzle 17a is rinsed with the rinsing liquid 39. Accordingly, mixture of the cleaning liquid 35 into the reagent vessel 7 decreases in this reference example.

## Claims

1. A liquid dispensing method comprising steps performed in the order of:
a first step that fills the inside of a pipe (17) with cleaning liquid (35);
a second step that sucks rinsing liquid (39) into the pipe (17) from a rinsing liquid vessel (9) with gas interposed between the cleaning liquid (35) and the rinsing liquid (39);
a third step that further sucks dispensing target liquid (37) into the pipe (17) from a dispensing target liquid vessel (7) with gas interposed between the rinsing liquid (39) and the dispensing target liquid (37);
a fourth step that discharges a predetermined amount of the sucked in dispensing target liquid (37) of the pipe (17) into a discharge vessel (11);
a fifth step that discharges and disposes of a remainder of the dispensing target liquid (37) and the rinsing liquid (39) remaining in the pipe (17) into a cleaning port (13); and
a sixth step that cleans the inside of the pipe (17) by the cleaning liquid (35);
wherein the rinsing liquid (39) is constituted by the dispensing target liquid (37) or a main component of the dispensing target liquid (37).

## Patentansprüche

1. Flüssigkeitsabgabeverfahren, das Schritte umfasst, die in der folgenden Reihenfolge durchgeführt werden:
ein erster Schritt, der das Innere eines Rohrs (17) mit Reinigungsflüssigkeit (35) füllt;
ein zweiter Schritt, der Spülflüssigkeit (39) von einem Spülflüssigkeitsbehälter (9) in das Rohr (17) saugt, wobei sich Gas zwischen der Reinigungsflüssigkeit (35) und der Spülflüssigkeit (39) befindet;
ein dritter Schritt, der ferner Abgabezielflüssigkeit (37) von einem Abgabezielflüssigkeitsbehälter (7) in das Rohr (17) saugt, wobei sich Gas zwischen der Spülflüssigkeit (39) und der Abgabezielflüssigkeit (37) befindet;
ein vierter Schritt, der eine vorbestimmte Menge der eingesaugten Abgabezielflüssigkeit (37) des Rohrs (17) in einen Ablassbehälter (11) ablässt;
ein fünfter Schritt, der einen Rest der Abgabezielflüssigkeit (37) und der Spülflüssigkeit (39), der in dem Rohr (17) zurückgeblieben ist, in eine Reinigungsöffnung (13) ablässt und entsorgt; und
ein sechster Schritt, der das Innere des Rohrs (17) durch die Reinigungsflüssigkeit (35) reinigt;
wobei die Spülflüssigkeit (39) aus der Abgabezielflüssigkeit (37) oder einer Hauptkomponente der Abgabezielflüssigkeit (37) besteht.

## Revendications

1. Procédé d'administration de liquide qui comprend des étapes exécutées dans l'ordre suivant :
une première étape qui remplit l'intérieur d'un tuyau (17) avec du liquide de nettoyage (35) ;
une seconde étape qui aspire un liquide de rinçage (39) dans le tuyau (17) depuis une cuve de liquide de rinçage (9) avec un gaz interposé entre le liquide de nettoyage (35) et le liquide de rinçage (39) ;
une troisième étape qui aspire en outre le liquide cible à distribuer (37) dans le tuyau (17) depuis une cuve de liquide cible à distribuer (7) avec un gaz interposé entre le liquide de rinçage (39) et le liquide cible à distribuer (37) ;
une quatrième étape qui évacue une quantité prédéterminée du liquide cible à distribuer aspiré (37) du tuyau (17) dans une cuve de décharge (11) ;
une cinquième étape qui évacue et élimine un reste du liquide cible à distribuer (37) et du liquide de rinçage (39) restant dans le tuyau (17) vers un orifice de nettoyage (13) ; et
une sixième étape qui nettoie l'intérieur du tuyau (17) avec le liquide de nettoyage (35) ;
dans lequel le liquide de rinçage (39) est constitué du liquide cible à distribuer (37) ou d'un composant principal du liquide cible à distribuer (37).
